**Europäisches Patentamt**

(19) **European Patent Office**

**Office européen des brevets**

(11) Numéro de publication: **0 250 331**
**B1**

(12) # FASCICULE DE BREVET EUROPEEN

(45) Date de publication du fascicule du brevet: **27.12.90**

(21) Numéro de dépôt: **87401384.0**

(22) Date de dépôt: **19.06.87**

(51) Int. Cl.⁵: **G02B 6/42**

(54) **Dispositif de connexion d'extrémité pour fibre optique avec composants opto-électroniques et couplage optique.**

(30) Priorité: **20.06.86 FR 8608902**

(43) Date de publication de la demande:
**23.12.87 Bulletin 87/52**

(45) Mention de la délivrance du brevet:
**27.12.90 Bulletin 90/52**

(84) Etats contractants désignés:
**DE FR GB IT**

(56) Documents cités:
**EP-A- 0 197 842**
**FR-A- 2 536 546**
**FR-A- 2 569 279**
**FR-A- 2 581 768**
**GB-A- 2 100 055**

**IBM TECHNICAL DISCLOSURE BULLETIN,**
**vol. 22, no. 12, mai 1980, pages 5288-5290, New York,**
**US; W.B. ARCHEY et al.: "Low loss optical coupler"**

(73) Titulaire: **COMPAGNIE DEUTSCH (Société Anonyme),**
**10, rue Lionel-Terray, F-92502 Ruell-Malmaison(FR)**

(72) Inventeur: **Puille, Richard, Rue des Grandes Ruelles**
**Aquigny, F-27400 Louviers(FR)**
Inventeur: **Maillard, Jean-Jacques, 4, parc des**
**Fontaines, F-27600 Fontaine Bellegner(FR)**

(74) Mandataire: **Loyer, Bertrand et al, Cabinet Pierre**
**Loyer 77, rue Boissière, F-75116 Paris(FR)**

**Description**

L'invention concerne un dispositif de connexion d'extrémité pour fibre optique avec composants opto-électroniques et couplage optique, avec embout terminal optique séparable.

La transmission de la lumière dans une fibre optique présente l'intérêt que le faisceau n'est pas sensiblement altéré dans la fibre. En revanche le long du parcours du faisceau à l'extrémité de chaque fibre, entre la fibre et son élément voisin immédiat (émetteur, recepteur, fibre), le faisceau, n'étant plus confiné dans la fibre, diverge dans l'air, et la quantité de lumière qui atteint l'élément suivant ne représente qu'une partie de la quantité émise, d'où une perte de l'intensité du signal optique.

En outre, cette diminution de la quantité de lumière transmise et considérablement accrue par la présence éventuelle de particules de poussière qui peuvent se poser sur l'extrémité de la fibre. Leurs sections relatives étant voisines, une seule particule peut masquer l'entrée de la fibre de façon importante et la quantité de lumière transmise s'en trouve alors considérablement diminuée.

Pour répondre à ces difficultés, on monte habituellement les fibres en bout à bout, ou très proches l'une de l'autre, et le montage doit être effectué avec une grande précision, dans une atmosphère exempte de poussière.

Une autre technique décrite dans le brevet FR-A-2 536 546 propose un boitier de connexion comportant un émetteur, un récepteur, une fibre optique et une surface semi-réfléchissante. Cependant les faisceaux optiques entre les différents organes ne sont pas parallèles et la disposition (et la proximité) des organes entre eux est importante, particulièrement en ce qui concerne la fibre. Le brevet préconise qu'elle soit scellée pour éviter tout mouvement et assurer la qualité de la transmission des signaux.

Le dispositif présente deux problèmes principaux :
- la fibre est inamovible : le boitier ne peut être utilisé qu'une fois, et doit être remplacé en cas de rupture de l'extrémité.
- du fait de la divergence des faisceaux, l'encombrement des organes récepteur et émetteur présente des difficultés de construction importante, par exemple nécessité de prévoir un corps transparent, et une face en forme de lentille comporte.

Le dispositif de couplage selon l'invention apporte une solution à ces inconvénients en ce qu'il permet de monter simplement dans un boitier un émetteur et un récepteur optique, et une fibre optique, chacun des éléments étant amovible indépendamment des autres.

L'invention a pour objet un dispositif de couplage optique de l'extrémité d'une fibre optique avec des composants opto-électroniques comportant un boitier, qui comprend comme composants opto-électroniques un émetteur et un récepteur amovibles de faisceaux lumineux, une lame semi-réfléchissante diviseur de faisceaux, un orifice d'émission-réception de faisceaux destiné à recevoir un câble de transmission optique par fibre, le boitier comportant en outre :

. entre l'émetteur et la lame, au voisinage de l'émetteur, une lentille convergente de transformation d'un faisceau divergent en un faisceau parallèle,
. un piège d'absorption des rayons parasites et émis réfléchis sur la lame,
caractérisé en ce qu'il comporte:
. un embout amovible portant le câble de transmission lors de l'utilisation du dispositif comportant à son extrémité une lentille convergente disposée à proximité de l'extrémité de la fibre de telle sorte que le faisceau divergent émis par la fibre soit parallèle, et qu'un faisceau parallèle reçu par ladite lentille converge sur l'extrémité de la fibre.
. entre la lame et le récepteur, au voisinage du récepteur, une lentille convergente qui transforme le faisceau parallèle en provenance de la fibre en un faisceau convergent,
et en ce que:
. les faisceaux, de part et d'autre de la lame semi-réfléchissante, entre les lentilles, sont acheminés dans l'air et,
. les lentilles sont disposées à proximité immédiate des organes de réception ou d'émission, afin que la distance qui les sépare desdits organes soit la plus faible possible.
. et le piège est une cavité disposée à l'opposé du récepteur par rapport à la lame.

Le dispositif est encore remarquable par les caractéristiques suivantes :
- le boitier comporte un support de montage de l'émetteur muni de moyen de refroidissement de l'émetteur,
- l'embout de câble est amovible et le boitier comporte un adaptateur d'embout amovible adaptable à différents types d'embouts.

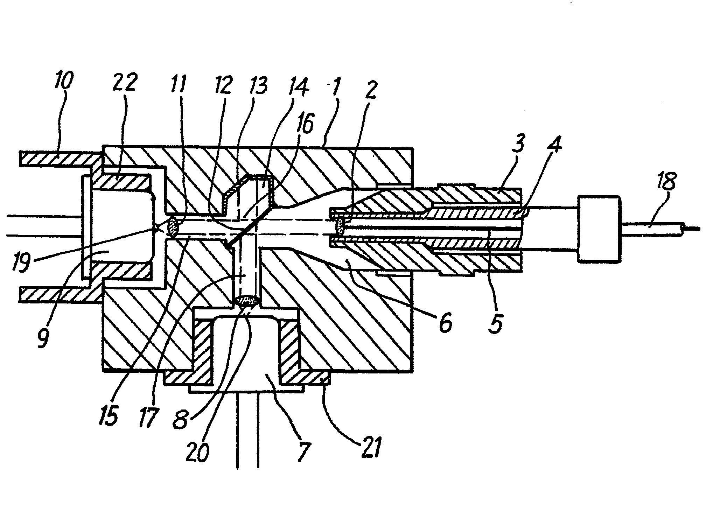

Pour mieux comprendre l'invention, on a représenté au dessin annexé une vue en coupe axiale d'un mode de réalisation du dispositif de couplage selon l'invention avec son embout optique.

Sur cette figure, on voit un boitier 1, muni de deux organes opto-électriques actifs distincts : un émetteur 9 et un récepteur 7. L'extrémité d'un câble optique 18, monté sur un embout 4 est insérée dans le boitier. Le boitier muni de ses organes est hermétique à la lumière du jour.

L'émetteur 9 est du type à diode électro-luminescente DEL, et le récepteur 7 du type photo-diode, mais tout autre type d'émetteur ou de récepteur pourrait être utilisé, et ces composants actifs sont amovibles.

Le boitier 1, de préférence de type moulé comporte un évidement comprenant trois parties :
A) La première partie comporte deux passages cylindriques 15, 17 s'étendant de l'extérieur vers l'intérieur, approximativement vers le centre du boitier. Dans chacun de ces passages, on dispose une lentille convergente 8, 11, et les faisceaux parcourent ces passages, dans l'air entre les lentilles, et l'embout 4.

L'émetteur et le récepteur sont montés sur le boîtier 1 en regard des passages 15, 17 ; leurs surfaces émettrice 19 et receptrice 20 sont situées dans le plan focal de la lentille correspondante, et la distance focale est de préférence courte, de sorte que :

1o- la lentille 11 reçoive le faisceau d'émission divergent le plus large possible, et donc la quantité de lumière la plus grande possible.

2o- le faisceau soit ensuite parallèle avec un diamètre le plus grand possible, très supérieur au diamètre de la fibre optique afin que la surface de la section du faisceau soit très supérieure à celle d'une particule de poussière et que la perturbation de la transmission du faisceau par une particule soit très peu sensible.

3o- les parcours entre la lentille et l'organe récepteur ou émetteur soient le plus court possible dans l'air pour éviter au maximum d'être interceptés par les particules de poussière, l'effet de masquage du faisceau étant plus important dans cette partie des parcours que dans la partie parallèle.

B) La deuxième partie de l'évidement du boitier 1 est une chambre 16 de division des faisceaux lumineux et de piégeage de la lumière parasite.

Cette chambre, située approximativement au centre du boitier, est séparée en deux par une lame mince semi-réfléchissante 12. Les faisceaux de lumière incidente s'y réfléchissent et la traversent en partie.

D'un côté de la lame 12 se trouve une cavité 14 de piégeage des rayons émis réfléchis : il est en effet nécessaire que la fraction de lumière à transmettre, traversant la lame vers la fibre, corresponde uniquement à la lumière émise directement par l'émetteur 9, et qu'aucun autre rayon secondaire parasite, dû notamment aux réflexions sur les parois de la chambre 16, ne puisse traverser la lame et atteindre la fibre.

Le piégeage est réalisé par un matériau 13, absorbant les rayons lumineux, dont sont pourvues les parois de la cavité 14.

Les deux passages cylindriques 15 et 17 débouchent dans la chambre 16 et s'étendent dans le boitier 1 symétriquement relativement au plan de la lame 12 semi-réfléchissante.

En outre, les passages cylindriques 15 et 17 forment entre eux un angle droit et la lame est inclinée à 45° par rapport à l'axe du faisceau d'émission.

C) De l'autre côté de la lame, la chambre 16 débouche sur un orifice 6 d'émission-réception de faisceau optique.

L'orifice est unique : il sert à l'émission et à la réception.

L'axe de l'orifice correspond sensiblement à l'un des axes d'émission ou de réception, à 90° près, de sorte que, entre la fibre 5 et la lame 12 les deux faisceaux d'émission et de réception sont coaxiaux. De préférence, l'orifice 6 et le passage 15 sont coaxiaux.

L'orifice 6 est destiné à recevoir un embout 4 de câble comportant une fibre optique 5 dans son axe. L'embout comporte une extrémité cylindrique creuse pénétrant dans le boitier, coaxialement à l'orifice 6, jusqu'à proximité de la lame semi-réfléchissante. On dispose dans cette extrémité une lentille convergente 2. La fibre optique 5 s'étend dans cette extrémité, coaxialement, et son extrémité se situe au foyer de la lentille 2, de sorte que le faisceau, parallèle dans le boitier, converge sur l'extrémité de la fibre et inversement.

L'embout 4 et sa lentille 2 sont montés préalablement dans une atmosphère exempte de poussière pour éviter la présence de particules sur l'extrémité de la fibre.

L'embout est amovible et l'invention prévoit des adaptateurs d'embout 3, permettant d'adapter différentes formes d'embout au boitier.

De préférence, le montage de l'embout 4 ou de l'adaptateur d'embout 3 sur le boitier 1 est du type à baïonnette ou à vis, mais tout autre type de fixation peut être employé.

D'autre part, les composants actifs sont montés sur le boitier par l'intermédiaire de bagues-supports 21, 22 qui permettent de centrer le composant 7, 9 dans l'axe de réception ou d'émission.

En outre, la bague 22 de l'émetteur 9 comporte des extensions 10 de refroidissement de sorte que la chaleur dégagée par l'activité de l'émetteur se dissipe dans l'air ambiant. La température de la zone d'émetteur s'en trouve ainsi réduite, ce qui améliore la fiabilité du composant émetteur.

Le dispositif de couplage selon l'invention procure les avantages suivants :
- il est peu sensible à la pollution :les lentilles élargissent le faisceau et le parcours s'effectue dans l'air dans un faisceau parallèle élargi par rapport à la section de la fibre, et relativement insensible aux particules de poussières,
- le montage des différents éléments ne nécessite pas un alignement très précis: l'élargissement du faisceau et le positionnement des lentilles relativement aux centres d'émission et de réception autorisent un certain jeu. La mise en place des éléments en est grandement facilité.

## Revendications

1. Dispositif de couplage optique de l'extrémité d'une fibre optique avec des composants opto-électroniques comportant un boitier (1), qui comprend comme composants opto-électroniques un émetteur (9) et un récepteur (7) amovibles de faisceaux lumineux, une lame (12) semi-réfléchissante diviseur de faisceaux, un orifice (6) d'émission-réception de faisceaux destiné à recevoir un câble (18) de transmission optique par fibre (5), le boitier (1) comportant en outre :
. entre l'émetteur (9) et la lame (12), au voisinage de l'émetteur (9), une lentille convergente (11) de transformation d'un faisceau divergent en un faisceau parallèle,
. un piège d'absorption (13, 14) des rayons parasites et émis réfléchis sur la lame (12),
caractérisé en ce: qu'il comporte
. un embout amovible portant le câble de transmission lors de l'utilisation du dispositif, comportant à son extrémité une lentille (2) convergente disposée à proximité de l'extrémité de la fibre (5) de telle sorte que le faisceau divergent émis par la fibre soit parallèle, et qu'un faisceau parallèle reçu par ladite lentille (2) converge sur l'extrémité de la fibre (5).
. entre la lame (12) et le récepteur (7), au voisinage du récepteur, une lentille convergente (8) qui transforme le faisceau parallèle en provenance de la fibre en un faisceau convergent,
et en ce que

- les faisceaux, de part et d'autre de la lame (12) semi-réfléchissante, entre les lentilles (2, 8, 11), sont acheminés dans l'air, et
- les lentilles (8, 11) sont disposées à proximité immédiate des organes de réception (7) ou d'émission (9), afin que la distance qui les sépare desdits organes soit la plus faible possible.
. et le piège est une cavité (14) disposée à l'opposé du récepteur par rapport à la lame (12).

2. Dispositif selon la revendication 1 caractérisé en ce que le diamètre des faisceaux parallèles traversant le boitier (1) est très supérieur au diamètre de la fibre optique (5) de sorte que l'interception des faisceaux optiques par les particules de poussière soit sans effet sensible sur la qualité du signal transmis.

3. Dispositif de connexion d'extrémité selon la revendication 1, caractérisé en ce que le boitier (1) muni des composants opto-électriques (7, 9) et de l'embout (4) est hermétique à la lumière du jour.

4. Dispositif de connexion d'extrémité selon la revendication 2, caractérisé en ce que le boitier (1) comporte des bagues (21, 22) de montage et de centrage des composants opto-électriques (7, 9).

5. Dispositif de connexion d'extrémité selon la revendication 4, caractérisé en ce que la bague (22) de montage de l'émetteur (9) comporte des extensions (10) de refroidissement de l'émetteur (9).

6. Dispositif de connexion d'extrémité selon la revendication 1, caractérisé en ce que l'embout (4) est monté sur un adaptateur d'embout (3).

**Patentansprüche**

1. Vorrichtung zur optischen Kopplung des Endes einer optischen Faser mit opto-elektronischen Komponenten, die ein Gehäuse (1) umfaßt und als optoelektronische Komponenten eine abnehmbare Sendeeinrichtung (9) und eine abnehmbare Empfangseinrichtung (7) für die Lichtbündel umfaßt, und weiterhin ein teilweise reflektierendes Plättchen (12) als Strahlteiler, eine Sende-Empfangsöffnung (6) für die Lichtbündel zur Aufnahme eines Kabels (18) für die optische Übertragung über eine Faser (5) umfaßt, wobei das Gehäuse (1) weiterhin folgendes umfaßt:
zwischen dem Sender (9) und dem Plättchen (12), in Nachbarschaft zu dem Sender (9), eine Sammellinse (11) zur Umwandlung eines divergierenden Bündels in ein paralleles Bündel,
eine Absorptionsfalle (13, 14) für parasitäre Strahlen und ausgesendete Strahlen, die auf dem Plättchen (12) reflektiert worden sind,
dadurch gekennzeichnet, daß
sie ein abnehmbares Ansatzstück umfaßt, das das Übertragungskabel bei der Benutzung der Vorrichtung trägt, wobei das Ansatzstück an seinem Ende eine Sammellinse (2) aufweist, die in der Nähe des Endes der Faser (5) dergestalt angeordnet ist, daß das divergierende Lichtbündel, das von der Faser ausgesendet wird, parallelgerichtet wird, und daß ein paralleles Lichtbündel, das von der Linse (2) empfangen wird, auf das Ende der Faser (5) konzentriert wird,
daß zwischen dem Plättchen (12) und dem Empfänger (7) eine Sammellinse (8) in Nachbarschaft zu dem Empfänger angebracht ist, die das parallele Lichtbündel, das von der Faser kommt, in ein konvergierendes Lichtbündel umwandelt, und dadurch, daß die Lichtbündel auf beiden Seiten des teilweise reflektierenden Plättchens (12) zwischen den Linsen (2, 8, 11) in der Luft geführt werden, und daß die Linsen (8, 11) in direkter Nachbarschaft zu den Empfangsorganen (7) oder Sendeorganen (9) angeordnet sind, so dass der Abstand, der sie von den genannten Organen trennt, so gering wie möglich ist, und daß Falle ein Hohlraum (14) ist, der gegenüber dem Empfänger in bezug auf das Plättchen (12) angeordnet ist.

2. Vorrichtung nach Anspruch 1, dadurch gekennzeichnet, daß der Durchmesser der parallelen Lichtbündel, die das Gehäuse (1) durchqueren, wesentlich größer ist, als der Durchmesser der optischen Faser (5), dergestalt, daß die Absorption von Lichtbündeln durch Staubpartikel keine fühlbare Wirkung auf die Qualität des übertragenen Signals hat.

3. Vorrichtung zur Verbindung des Endes nach Anspruch 1, dadurch gekennzeichnet, daß das Gehäuse (1), das mit den opto-elektronischen Bauelementen (7, 9) und dem Anschlußstück (4) versehen ist, gegenüber dem Tageslicht dicht ist.

4. Vorrichtung zum Anschluß des Endes nach Anspruch 2, dadurch gekennzeichnet, daß das Gehäuse (1) Ringe (21, 22) zur Montage und zur Zentrierung der opto-elektronischen Bauelemente (7, 9) umfasst.

5. Vorrichtung zum Anschluss des Endes nach Anspruch 4, dadurch gekennzeichnet, dass der Ring (22) zur Montage des Senders (9) Verlängerungen (10) zur Kühlung des Senders (9) aufweist.

6. Vorrichtung zur Verbindung des Endes nach Anspruch 1, dadurch gekennzeichnet, daß das Anschlußstück (4) auf einem Anschlußstückadapter (3) montiert ist.

**Claims**

1. Optical coupling device for the end of an optical fibre with optoelectronic components comprising a case (1) which comprises as optoelectronic components a movable transmitter (9) and receiver (7) for the luminous bundles, a semi-reflecting bundle divider blade (12), an aperture (6) for transmitting and receiving the bundle intended to receive an optical cable (18) transmitting by means of fibre (5), the case (1) comprising in addition:
– between the transmitter (9) and the blade (12), in the vicinity of the transmitter (9), a converging lens (11) for transforming a divergent bundle into a parallel bundle;
– an absorption trap (13, 14) for the interference rays and are emitted so that they reflect on the blade (12); characterized in that
– it comprises a moveable end piece which carries the transmission cable when the device is used, comprising at the end thereof a converging lens (2) disposed close to the end of the fibre (5) in such a way that the divergent bundle which is emitted by the fibre is parallel and that a parallel bundle received by the said lens (2) converges at the end of the fibre (5);

– between the blade (12) and the receiver (7), in the vicinity of the receiver, a converging lens (8) which transforms the parallel bundle from the fibre into a converging bundle;

and in that

– the semi-reflecting bundles on both sides of the blade (12), between the lenses (2, 8, 11) are directed in the air and the lenses (8, 11) are disposed in the immediate proximity of receiving (7) or transmission (9) devices so that the distance which separates them from the said devices is as small as possible;

– and the trap is a cavity (14) which is disposed opposite the receiver with respect to the blade (12).

2. Device according to claim 1, characterized in that the diameter of the parallel bundles crossing the case (1) is far greater than the diameter of the optical fibre (5) in such a way that the optical fibres are intercepted by the dust particles without a substantial effect on the quality of the signal transmitted.

3. End connection device according to claim 1, characterized in that the case (1) which is provided with optoelectric components (7, 9) and the end piece (4) is sealed against daylight.

4. End connection device according to claim 2, characterized in that the case (1) comprises mounting and centering rings (21, 22) for the optoelectric components (7, 9).

5. End connection device according to claim 4, characterized in that the mounting ring (22) of the transmitter (9) comprises cooling extensions (10) for the transmitter (9).

6. End connection device according to claim 1, characterized in that the end piece (4) is disposed on an end piece adapter (3).